# EUROPÄISCHE PATENTSCHRIFT

(11) **EP 0 600 340 B1**
(45) Veröffentlichungstag und Bekanntmachung des Hinweises auf die Patenterteilung: **29.01.1997**
(21) Anmeldenummer: 93118772.8
(22) Anmeldetag: 22.11.1993
(51) Int. Cl.: H05B 41/29

(54) **Passive Schaltungsanordnung zur Verbesserung des Leistungsfaktor**
Passive circuit for improving the power factor
Circuit passif pour améliorer le facteur de puissance

(30) Priorität: 04.12.1992 DE 4240901
(43) Veröffentlichungstag der Anmeldung: 08.06.1994
(73) Patentinhaber: Patent-Treuhand-Gesellschaft für elektrische Glühlampen mbH, 81543 München (DE)
(72) Erfinder: Reiser, Ludwig, D-86368 Gersthofen (DE)

(56) Entgegenhaltungen:
- WO-A-91/02400
- VERDERBER 'Conference record of the 1991 IEEE iasam Vol 2' 1. Oktober 1991 , DEARBORN * Seite 1854, rechte Spalte, Zeile 40 - Seite 1854, rechte Spalte, Zeile 55; Abbildung 7 *

## Beschreibung

Die Erfindung betrifft eine Schaltungsanordnung zum hochfrequenten Betrieb einer oder mehrerer parallel zueinander geschalteter Verbraucher, mit einem Entstörfilter, einem mit dem Entstörfilter verbundenen Gleichrichter, einem sich daran anschließenden Dioden-Kondensator-Netzwerk und einem HF-Inverter, an dessen Ausgang der oder die Verbraucher angeschlossen sind.

Eine derartige Schaltungsanordnung ist unter anderem aus der europäischen Patentschrift 0 253 224 B1 bekannt. Diese bekannte Schaltungsanordnung weist zwar unter anderem einen Oberwellenfilter auf, der zusätzlich zu den beiden in Gleichstromvorwärtsrichtung geschalteten Dioden zwei weitere Dioden in Serie aufweist, die über einen Kondensator mit dem Mittenabgriff zwischen den beiden Transistoren des Gegentaktfrequenzgenerators verbunden sind, wodurch eine sinusförmige Netzstromaufnahme und eine lineare Abhängigkeit der Gleichstromverbraucherleistung von der Netzspannung gewährleistet wird. Andererseits treten aber Verluste wegen der zu leistenden Pumparbeit auf, die den Wirkungsgrad verschlechtern, sowie Hochfrequenzstörungen in der Umgebung des Verbrauchers, die aufwendig entstört werden müssen. Des weiteren können durch Überpumpen auftretende Überspannungen den Siebkondensator beschädigen oder gar zerstören.

Weitere Lösungen dieses Problems verwenden entweder vollelektronische Schaltungen, die kompliziert und teuer sind, dafür aber eine fast perfekte, sinusförmige Stromaufnahme bieten, oder Vorschaltimpedanzen, die entweder magnetisch und damit groß und teuer sind oder ohmisch und damit stark verlustbehaftet sind.

Der Erfindung liegt daher die Aufgabe zugrunde, eine Schaltungsanordnung der eingangs genannten Art anzugeben, die mit technisch einfachen Mitteln bei geringen Verlustleistungen gleichzeitig eine Erhöhung des Leistungsfaktors gewährleistet.

Diese Aufgabe wird bei einer Schaltungsanordnung der eingangs genannten Art erfindungsgemäß dadurch gelöst, daß das Dioden-Kondensator-Netzwerk eine derart geschaltete Dioden-Kondensator-Siebkette ist, daß deren Siebkondensatoren über ein Dioden-Widerstandsnetzwerk geladen bzw. entladen werden, wobei die Siebkondensatoren beim Aufladen seriell und beim Entladen kombiniert parallel-seriell geschaltet sind.

Gemäß einer bevorzugten und vorteilhaften Ausführungsform der Erfindung besteht die Dioden-Kondensator-Siebkette aus drei Teilnetzwerken, wobei das erste Teilnetzwerk aus einem mit dem Pluspol des Gleichrichters verbundenen ersten Siebkondensator, einer damit in Reihe geschalteten und mit dem Minuspol des Gleichrichters verbundenen ersten Diode und einer zwischen dem ersten Siebkondensator und der ersten Diode angeschlossenen, eine zweite Diode und eine erste Ladeimpedanz umfassende Reihenschaltung besteht, das zweite Teilnetzwerk einen aus einem an den Minuspol des Gleichrichters angeschlossenen zweiten Siebkondensator, eine daran angeschlossene dritte Diode und einen darauf folgenden, mit dem Pluspol des Gleichrichters verbundenen dritten Siebkondensator bestehende Reihenschaltung umfaßt, an die zwischen dem dritten Siebkondensator und der dritten Diode eine weitere aus einer vierten Diode und zweiten Ladeimpedanz bestehende Reihenschaltung angeschlossen ist. Das dritte Teilnetzwerk besteht dabei aus einer einen vierten mit dem Minuspol des Gleichrichters verbundenen Siebkondensator und eine fünfte Diode umfassenden Reihenschaltung. Dabei ist das erste Teilnetzwerk über die erste Ladeimpedanz zwischen dem zweiten Siebkondensator und der dritten Diode an das zweite Teilnetzwerk angeschlossen, während das zweite Teilnetzwerk über die zweite Ladeimpedanz an einen zwischen dem vierten Siebkondensator und der fünften Diode vorhandenen Verknüpfungspunkt an das dritte Teilnetzwerk angeschlossen ist.

Vorzugsweise genügen dabei die einzelnen Bauteile der in Anspruch 3 angegebenen Gleichungen, wobei genaue Werte dem Anspruch 4 entnehmbar sind.

Das serielle Aufladen und kombiniert seriell-parallele Entladen kann in einer Reihenentwicklung beliebig fortgeführt werden. Dazu werden lediglich die Bauteile des zweiten Teilnetzwerks miteinander verknüpft mehrfach vorgesehen, wobei gemäß einer bevorzugten Ausführungsform das zweite Teilnetzwerk doppelt vorhanden ist. Die dafür verwendeten einzelnen Bauteile genügen bevorzugt Gleichungen, die im Patentanspruch 6 angegeben sind. Bevorzugte Werte dieser Bauteile sind dem Patentanspruch 7 entnehmbar.

Bei der ersten Ausführungsform werden die beiden ersten Siebkondensatoren in Serie über die zweite Diode und die erste Ladeimpedanz und der dritte und vierte Siebkondensator in Serie über die vierte Diode und die zweite Ladeimpedanz geladen. So lange der Augenblickswert der Netzspannung über ca. 2/3 der Netzspitzenspannung liegt, wird die Energie zum Betrieb des HF-Inverters bzw. jedes anderen Verbrauchers, direkt dem Netz entnommen. Sinkt der Augenblickswert der Netzspannung unter ca. 2/3 der Netzspitzenspannung, so werden der erste Siebkondensator und der vierte Siebkondensator und die Reihenschaltung aus dem zweiten und dritten Siebkondensator über die erste, dritte und fünfte Diode parallel entladen und betreiben den Verbraucher mit 2/3 der maximalen Versorgungsspannung minus der Brummspannung.

Die Spannungsschwankung über eine Netzhalbperiode ist damit deutlich geringer als bei der bekannten seriell-parallel- Schaltung mit zwei Elkos, drei Dioden und einem Widerstand, wie sie aus der europäischen Patentanmeldung 0 440 244 A2 bekannt ist. Je nach Auslegung der beiden Ladeimpedanzen kann der Leistungsfaktor bis zu 0,9 und der Gesamtklirrfaktor des aufgenommenen Netzstroms ca. 40 % betragen. Gleichzeitig ist die Forderung nach einem Lampenstromcrestfaktor < 1,7 erfüllt.

Das serielle Aufladen und kombiniert seriell-parallele Entladen kann in einer Reihenentwicklung beliebig fortgeführt werden, was in der zweiten Ausführungsform gemäß Anspruch 5 angegeben ist. Dabei wird die Welligkeit der geglätteten Gleichspannung immer geringer, wobei allerdings zu berücksichtigen ist, daß im gleichen Maße auch der Leistungsfaktor sinkt und der Klirrfaktor des Netzstromes sowie die Bauelementezahl ansteigt.

Bei dieser oder ähnlichen Schaltungsanordnungen ist jedoch von Nachteil, daß die Siebelemente kaum Netzspannungsspitzen vor dem Inverter abfangen und daß die Siebkondensatoren zur Funkentstörung fast nichts mehr beitragen. Daher ist ein Entstörfilter vorgesehen, der gemäß einer weiteren Ausführungsform auf der Gleichstromseite zwischen Gleichrichter und Siebnetzwerk und/oder zwischen dem Siebnetzwerk und dem HF-Inverter geschaltet ist, oder auf der Wechselstromseite zwischen Netz und Gleichrichter geschaltet wird.

Die Schaltungsanordnung läßt sich nicht nur aus einem Brückengleichrichter speisen, sie ist auch mit Einwegoder Zweiweggleichrichtern, auch in mehrphasigen Netzen, kombinierbar, wobei zu berücksichtigen ist, daß bei Verwendung eines Spannungsdopplers die Siebkette in doppelter Ausführung notwendig ist.

Weitere Vorteile und Merkmale der Erfindung ergeben sich aus der folgenden Beschreibung mehrerer Ausführungsformen sowie aus den Zeichnungen, auf die Bezug genommen wird. Es zeigen:
- Figur 1: eine Schaltungsanordnung mit einem Dioden-Kondensator-Netzwerk gemäß einer ersten Ausführungsform;
- Figur 2: den Verlauf der von der Ausführungsform gemäß Figur 1 geglätteten Gleichspannung;
- Figur 3: der zur Figur 2 dazugehörige Netzstromverlauf;
- Figur 4: eine Schaltungsanordnung mit einem Dioden-Kondensator-Netzwerk gemäß einer zweiten Ausführungsform;
- Figur 5: den Verlauf der von der Ausführungsform gemäß Figur 4 geglätteten Gleichstroms; und
- Figur 6: der zu Figur 5 dazugehörige Netzstromverlauf.

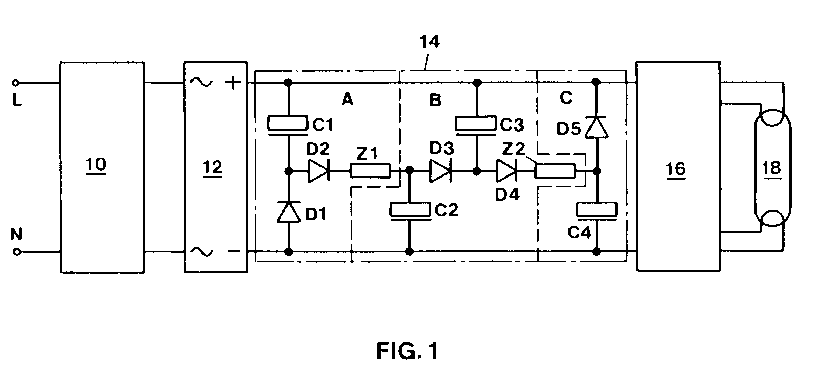

In Figur 1 ist eine Schaltungsanordnung zum hochfrequenten Betrieb eines Verbrauchers 18 dargestellt. Diese Schaltungsanordnung enthält einen Entstörfilter 10, der an das Stromnetz angeschlossen ist und an dessen Ausgang ein Gleichrichter 12 geschaltet ist. An den Ausgängen des Gleichrichters 12 ist eine Dioden-Kondensator-Siebkette 14 angeschlossen, der ein HF-Inverter 16 folgt zur Speisung eines Verbrauchers 18, der bevorzugt eine Niederdruckentladungslampe ist.

Die Dioden-Kondensator-Siebkette 14 ist derart geschaltet, daß deren Siebkondensatoren C₁ bis C₄ über ein Dioden-Widerstandsnetzwerk D₁ bis D₄ und Z_{1,2} seriell aufladbar und parallel bzw. seriell entladbar sind. Die Dioden-Kondensator-Siebkette 14 besteht dabei aus drei Teilnetzwerken A, B und C, wobei das erste Teilnetzwerk A aus einem mit dem Pluspol des Gleichrichters 12 verbundenen ersten Kondensator C₁, einer damit in Reihe geschalteten und mit dem Minuspol des Gleichrichters 12 verbundenen ersten Diode D₁ und einer zwischen dem ersten Siebkondensator C₁ und der ersten Diode D₁ angeschlossenen, eine zweite Diode D₂ und eine erste Ladeimpedanz Z₁ umfassende Reihenschaltung besteht. Das zweite Teilnetzwerk B umfaßt eine aus einem an den Minuspol des Gleichrichters 12 angeschlossenen zweiten Siebkondensator C₂, einer daran angeschlossene dritte Diode D₃ und einem darauf folgenden, mit dem Pluspol des Gleichrichters 12 verbundenen dritten Siebkondensator C₃ bestehende Reihenschaltung. An diese Reihenschaltung ist zwischen dem dritten Siebkondensator C₃ und der dritten Diode D₃ eine weitere aus einer vierten Diode D₄ und einer zweiten Ladeimpendanz Z₂ bestehende Reihenschaltung angeschlossen. Das dritte Teilnetzwerk C besteht aus einer einen vierten mit dem Minuspol des Gleichrichters 12 verbundenen Siebkondensator C₄ und eine fünfte mit dem Pluspol des Gleichrichters 12 verbundene Diode D₅ umfassenden Reihenschaltung. Dabei ist das erste Teilnetzwerk A über die erste Ladeimpendanz Z₁ zwischen dem zweiten Siebkondensator C₂ und der dritte Diode D₃ an das zweite Teilnetzwerk B angeschlossen. Das zweite Teilnetzwerk B ist über die zweite Ladeimpendanz Z₂ an einem zwischen dem vierten Siebkondensator C₄ und der fünften Diode D₅ vorhandenen Verknüpfungspunkt an das dritte Teilnetzwerk C geschaltet.

Bei dieser Ausführungsform ist es günstig, wenn die Kapazität des ersten Siebkondensators C₁ gleich der des vierten Siebkondensators C₄ ist, die Kapazität des zweiten Siebkondensators C₂ der Kapazität des dritten Siebkondensators C₃ entspricht und die Kapazität des zweiten Siebkondensators C₂ gleich der zweifachen Kapazität des ersten Siebkondensators C₁ ist. Vorzugsweise sind die beiden Ladeimpendanzen ebenfalls gleich groß.

Beispielsweise werden für eine 20 W/228V kompakte Leuchtstofflampen-Anordnung folgende Werte verwendet: C₁ = 3,3 µF, C₂ = 6,8 µF und Z₁ = Z₂ = 220 Ω.

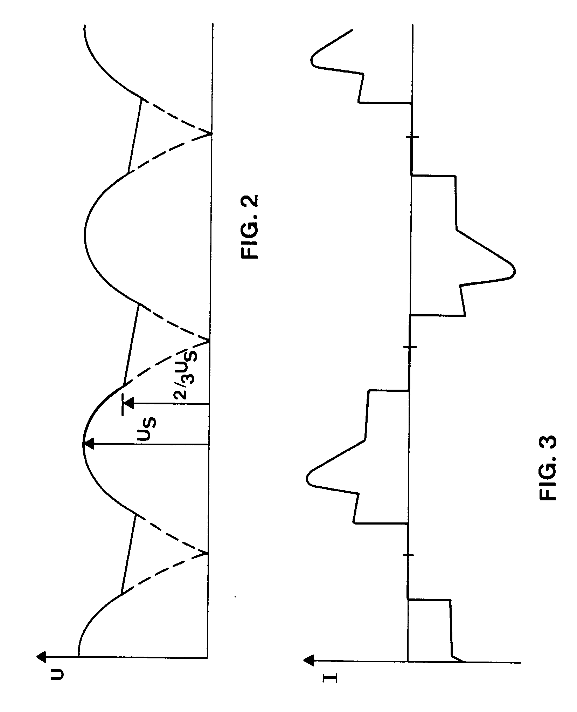

Mit der in Figur 1 angegebenen Ausführungsform ist es möglich, die in Figur 2 angegebene geglättete Gleichspannung für den Inverter 16 bzw. Verbraucher 18 zu erzeugen. Dabei werden der erste Siebkondensator C₁ und der zweite Siebkondensator C₂ in Serie über die zweite Diode D₂ und die erste Ladeimpendanz Z₁ und der dritte Siebkondensator C₃ und der vierte Siebkondensator C₄ in Serie über die vierte Diode D₄ und zweite Ladeimpendanz Z₂ geladen. Solange der Augenblickswert der Netzspannung über ca. 2/3 der Netzspitzenspannung liegt, wird die Energie zum Betrieb des HF-Inverters, oder jedes anderen DC-Verbrauchers, direkt dem Netz entnommen. Sinkt der Augenblickswert der Netzspannung unter ca. 2/3 der Netzspitzenspannung, so werden der erste Siebkondensator C₁ und der vierte Siebkondensator C₄ und die Reihenschaltung aus dem zweiten Siebkondensator C₂ und dem dritten Siebkondensator C₃ über die erste Diode D₁, dritte Diode D₃ und fünfte Diode D₅ parallel entladen und betreiben den Verbraucher mit 2/3 der maximalen Versorgungsspannung, wobei die Brummspannung noch abzuziehen ist. In Figur 3 ist der entsprechende Netzstrom-Verlauf dargestellt.

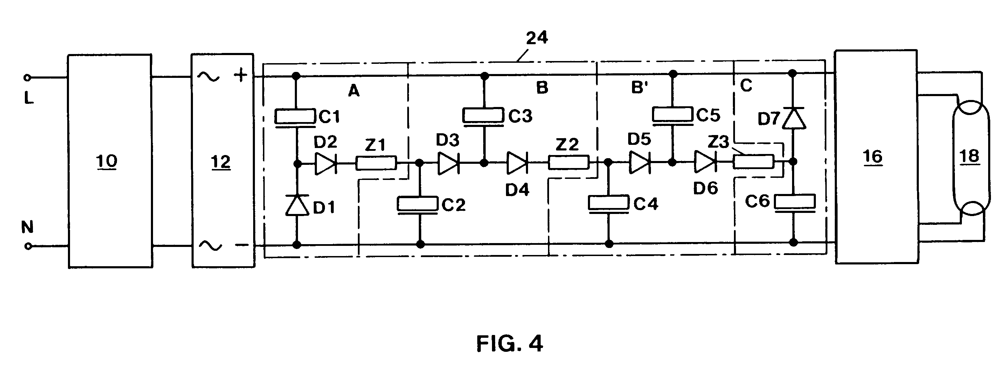

Die in Figur 4 dargestellte Ausführungsform der Schaltungsanordnung entspricht im wesentlichen der in Figur 1 dargestellten Ausführungsform, so daß gleiche Bauteile mit gleichen Bezugszeichen versehen sind. Der Unterschied der in Figur 4 dargestellten Dioden-Kondensator-Siebkette 24 zu der in Figur 1 dargestellten Dioden-Kondensator-Siebkette 14 besteht darin, daß das zweite Teilnetzwerk B in Reihe geschaltet zweimal vorhanden ist, wobei das zusätzliche Teilnetzwerk mit B' bezeichnet ist.

Da die übrigen Verknüpfungen dieses Dioden-Kondensator-Netzwerks bzw. der Dioden-Kondensator-Siebkette 24 derjenigen der in Figur 1 dargestellten Dioden-Kondensator-Siebkette 14 entsprechen, wird auf eine detaillierte Beschreibung verzichtet.

Mit Hilfe dieser Dioden-Kondensator-Siebkette 24 ist es möglich, die Welligkeit der Gleichspannung weiter zu glätten. Dazu werden die Siebkondensatoren C₁ und C₂ über die Diode D₂ und die Ladeimpendanz Z₁, die Siebkondensatoren C₃ und C₄ über die Diode D₄ und die Ladeimpendanz Z₂ und die Siebkondensatoren C₅ und C₆ über die Diode D₆ und die Ladeimpendanz Z₃ jeweils in Serie geladen. Solange der Augenblickswert der Netzspannung über ca. 3/4 der Netzspitzenspannung liegt, wird die Energie zum Betrieb des HF-Inverters (oder jedes anderen Gleichstromverbrauchers) direkt dem Netz entnommen. Sinkt der Augenblickswert der Netzspannung unter ca. 3/4 der Netzspitzenspannung, so werden die Siebkondensatoren C₁ und C₄ und die Reihenschaltungen aus den Siebkondensatoren C₂ und C₃ sowie C₄ und C₅ über die Dioden D₁, D₃, D₅ und D₇ parallel entladen und betreiben den Verbraucher mit 3/4 der maximalen Versorgungspannung, wobei ebenfalls wieder die Brummspannung abzuziehen ist.

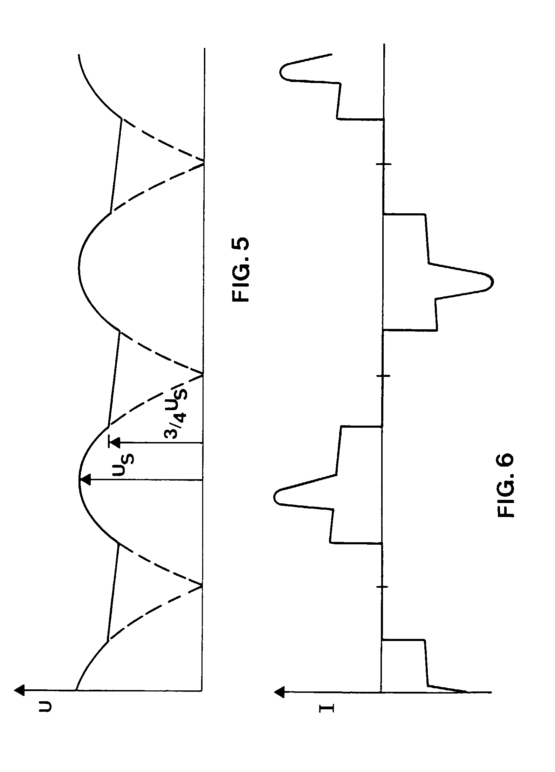

Damit ergibt sich der in Figur 5 dargestellte Gleichspannungsverlauf, während der entsprechende Netzstrom in Figur 6 dargestellt ist.

Für die zweite Ausführungsform ist es günstig, wenn die Siebkondensatoren C₁ und C₆, C₂ und C₅, C₃ und C₄ jeweils einander gleich sind, wobei der Siebkondensator C₂ den dreifachen Wert von dem Siebkondensator C₁ und der Siebkondensator C₃ den 1,5-fachen Wert des Siebkondensators C₁ aufweisen. Die jeweiligen Ladeimpendanzen sind ebenfalls gleich groß.

Eine beispielhafte 20 W/ 228V kompakte Leuchtstofflampen-Anordnung weist daher folgende Werte auf: C₁ = 6,8 µF, C₂ = 15 µF, C₃ = 10 µF, Z₁ bis Z₃ = 220 Ω.

Mit dem oben angegebenen Ausführungsformen von Dioden-Kondensator-Siebketten ist es möglich, die Netzstromoberwellen zu reduzieren, indem die Siebkondensatoren über ein Dioden-Widerstandsnetzwerk seriell geladen und dann parallel bzw. seriell wieder entladen werden.

## Patentansprüche

1. Schaltungsanordnung zum hochfrequenten Betrieb einer oder mehrerer parallel zueinander geschalteter Verbraucher (18), mit
- einem Entstörfilter (10),
- einem mit dem Entstörfilter (10) verbundenen Gleichrichter (12),
- einem sich daran anschließenden Dioden-Kondensator-Netzwerk und
- einem HF-Inverter (16), an dessen Ausgang der oder die Verbraucher (18) angeschlossen sind,
**dadurch gekennzeichnet,** daß das Dioden-Kondensator-Netzwerk eine derart geschaltete Dioden-Kondensator-Siebkette (14; 24) ist, daß deren Siebkondensatoren (C₁ bis C₄; C₁ bis C₆) über ein Dioden-Widerstandsnetzwerk (D₁ bis D₅, Z₁, Z₂; D₁ bis D₇, Z₁ bis Z₃) geladen bzw. entladen werden, wobei die Siebkondensatoren beim Aufladen seriell und beim Entladen kombiniert parallel-seriell geschaltet sind.

2. Schaltungsanordnung nach Anspruch 1,
dadurch gekennzeichnet, daß die Dioden-Kondensator-Siebkette (14) aus drei Teilnetzwerken (A, B, C) besteht, wobei das erste Teilnetzwerk (A) aus einem mit dem Pluspol des Gleichrichters (12) verbundenen ersten Siebkondensator (C₁), einer damit in Reihe geschalteten und mit dem Minuspol des Gleichrichters (12) verbundenen ersten Diode (D₁) und einer zwischen dem ersten Siebkondensator (C₁) und der ersten Diode (D₁) angeschlossenen, eine zweite Diode (D₂) und eine erste Ladeimpendanz (Z₁) umfassende Reihenschaltung besteht, das zweite Teilnetzwerk (B) eine aus einem an den Minuspol des Gleichrichters (12) angeschlossenen zweiten Siebkondensator (C₂), eine daran angeschlossene dritte Diode (D₃) und einen darauf folgenden, mit dem Pluspol des Gleichrichters (12) verbundenen dritten Siebkondensator (C₃) bestehende Reihenschaltung umfaßt, an die zwischen dem dritten Siebkondensator (C₃) und der dritten Diode (D₃) eine weitere aus einer vierten Diode (D₄) und zweiten Ladeimpendanz (Z₂) bestehende Reihenschaltung angeschlossen ist, und das dritte Teilnetzwerk (C) aus einer einen vierten mit dem Minuspol des Gleichrichters (12) verbundenen Siebkondensator (C₄) und eine fünfte mit dem Pluspol des Gleichrichters (12) verbundene Diode (D₅) umfassenden Reihenschaltung besteht und das erste Teilnetzwerk (A) über die erste Ladeimpendanz (Z₁) zwischen dem zweiten Siebkondensator (C₂) und der dritten Diode (D₃) an das zweite Teilnetzwerk (B) angeschlossen ist und das zweite Teilnetzwerk (B) über die zweite Ladeimpendanz (Z₂) an einen zwischen dem vierten Siebkondensator (C₄) und der fünften Diode (D₅) vorhandenen Verknüpfungspunkt an das dritte Teilnetzwerk (C) geschaltet ist.

3. Schaltungsanordnung nach Anspruch 2,
**dadurch gekennzeichnet**, daß die einzelnen Bauteile folgenden Gleichungen genügen:
C₁ = C₄
C₂ = C₃
C₂ = 2 x C₁
Z₁ = Z₂

4. Schaltungsanordnung nach Anspruch 3,
**dadurch gekennzeichnet**, daß die Bauteile bei einer 20 W/ 228V kompakten Leuchtstofflampen-Anordnung folgende Werte haben:
C₁ = 3,3 µF
C₂ = 6,8 µF
Z₁ = Z ₂ = 220 Ω

5. Schaltungsanordnung nach Anspruch 1,
**dadurch gekennzeichnet**, daß die Dioden-Kondensator-Siebkette (24) aus vier Teilnetzwerken (A, B, B', C) besteht, wobei das erste Teilnetzwerk (A) aus einem mit dem Pluspol des Gleichrichters (12) verbundenen ersten Siebkondensators (C₁), einer damit in Reihe geschalteten und mit dem Minuspol des Gleichrichters (12) verbundenen ersten Diode (D₁) und einer zwischen dem ersten Siebkondensator (C₁) und der ersten Diode (D₁) angeschlossenen, eine zweite Diode (D₂) und eine erste Ladeimpendanz (Z₁) umfassende Reihenschaltung besteht, das zweite Teilnetzwerk (B) eine aus einem an den Minuspol des Gleichrichters (12) angeschlossenen zweiten Siebkondensator (C₂), eine daran angeschlossene dritte Diode (D₃) und einen darauf folgenden, mit dem Pluspol des Gleichrichters (12) verbundenen dritten Siebkondensator (C₃) bestehende Reihenschaltung umfaßt, an die zwischen dem dritten Siebkondensator (C₃) und der dritten Diode (D₃) eine weitere aus einer vierten Diode (D₄) und zweiten Ladeimpendanz (Z₂) bestehende Reihenschaltung angeschlossen ist, das dritte Teilnetzwerk (B') dem zweiten Teilnetzwerk (B) entspricht und einen vierten und fünften Siebkondensator (C₄, C₅), eine fünfte und sechste Diode (D₅, D₆) sowie eine dritte Ladeimpendanz (Z₃) umfaßt, und das vierte Teilnetzwerk (C) aus einer einen sechsten mit dem Minuspol des Gleichrichters (12) verbundenen Siebkondensator (C₆) und eine siebte mit dem Pluspol des Gleichrichters (12) verbundene Diode (D₇) umfassenden Reihenschaltung besteht und das erste Teilnetzwerk (A) über die erste Ladeimpendanz (Z₁) zwischen dem zweiten Siebkondensator (C₂) und der dritten Diode (D₃) an das zweite Teilnetzwerk (B) angeschlossen ist, das zweite Teilnetzwerk (B) über die zweite Ladeimpendanz (Z₂) an einen zwischen dem vierten Siebkondensator (C₄) und der fünften Diode (D₅) vorhandenen Punkt an das dritte Teilnetzwerk (B') geschaltet ist und das dritte Teilnetzwerk (B') über die dritte Ladeimpendanz (Z₃) an einen zwischen dem sechsten Siebkondensator (C₆) und der siebten Diode (D₇) vorhandenen Verknüpfungspunkt an das vierte Teilnetzwerk (C) angeschlossen ist.

6. Schaltungsanordnung nach Anspruch 5,
**dadurch gekennzeichnet**, daß die einzelnen Bauteile folgenden Gleichungen genügen:
C₁ = C₆
C₂ = C₅
C₃ = C₄
C₂ = 3 x C₁
C₃ = 1,5 x C₁
Z₁ = Z₂ = Z₃

7. Schaltungsanordnung nach Anspruch 6,
**dadurch gekennzeichnet**, daß die einzelnen Bauteile bei einer 20 W/ 228V kompakten Leuchtstofflampen-Anordnung folgende Werte aufweisen:
C₁ = 6,8 µF
C₂ = 15 µF
C₃ = 10 µF
Z₁ = Z₂ = Z₃ = 220 Ω

8. Schaltungsanordnung nach einem der Ansprüche 1 bis 7,
**dadurch gekennzeichnet**, daß der bzw. die Verbraucher Niederdruckentladungslampen (18) sind.

9. Schaltungsanordnung nach einem der Ansprüche 1 bis 8,
**dadurch gekennzeichnet**, daß der Gleichrichter (12) ein Brückengleichrichter, ein Einweg- oder Zweiweggleichrichter ist, die auch in mehrphasigen Netzen kombinierbar sind.

10. Schaltungsanordnung nach einem der Ansprüche 1 bis 9,
**dadurch gekennzeichnet**, daß der Entstörfilter (10) zwischen den Gleichrichter (12) und die Dioden-Kondensator-Siebkette (14; 24) und/oder zwischen die Dioden-Kondensator-Siebkette (14; 24) und den HF-Inverter (16) oder auf der Wechselstromseite zwischen das Netz und den Gleichrichter (12) geschaltet ist.

## Claims

1. Circuit arrangement for radio-frequency operation of one or more loads (18) connected to one another in parallel, having
- an interference suppressor filter (10),
- a rectifier (12) connected to the interference suppressor filter (10),
- a diode/capacitor network connected to said rectifier, and
- an RF inverter (16) to whose output the load or loads (18) are connected,
characterized in that the diode/capacitor network is a diode/capacitor filter network (14; 24) connected in such a way that its filter capacitors (C₁ to C₄; C₁ to C₆) are charged or discharaged via a diode/resistor network (D₁ to D₅, Z₁, Z₂; D₁ to D₇, Z₁ to Z₃), the filter capacitors being connected serially during recharging and being connnected combined in a parallel-serial fashion during discharging.

2. Circuit arrangement according to Claim 1, characterized in that the diode/capacitor filter network (14) consists of three subnetworks (A, B, C), the first subnetwork (A) consisting of a first filter capacitor (C₁) connected to the positive terminal of the rectifier (12), a first diode (D₁), connected in series with said first filter capacitor and connected to the negative terminal of the rectifier (12), and a series circuit connected between the first filter capacitor (C₁) and the first diode (D₁) and comprising a second diode (D₂) and a first charging impedance (Z₁), the second subnetwork (B) comprising a series circuit, which consists of a second filter capacitor (C₂) connected to the negative terminal of the rectifier (12), a third diode (D₃) connected to said second filter capacitor and a third filter capacitor (C₃) downstream of said third diode and connected to the positive terminal of the rectifier (12), and to which a further series circuit, consisting of a fourth diode (D₄) and second charging impedance (Z₂), is connected between the third filter capacitor (C₃) and the third diode (D₃), and the third subnetwork (C) consisting of a series circuit comprising a fourth filter capacitor (C₄), connected to the negative terminal of the rectifier (12), and a fifth diode (D₅), connected to the positive terminal of the rectifier (12), and the first subnetwork (A) being connected to the second subnetwork (B) via the first charging impedance (Z₁) between the second filter capacitor (C₂) and the third diode (D₃), and the second subnetwork (B) being connected to the third subnetwork (C) at a node present between the fourth filter capacitor (C₄) and the fifth diode (D₅) via the second charging impedance (Z₂).

3. Circuit arrangement according to Claim 2, characterized in that the individual components satisfy the following equations:
C₁ = C₄
C₂ = C₃
C₂ = 2 x C₁
Z₁ = Z₂

4. Circuit arrangement according to Claim 3, characterized in that in the case of the 20 W/ 228V compact fluorescent lamp arrangement the components have the following values:
C₁ = 3.3 µF
C₂ = 6.8 µF
Z₁ = Z₂ = 220 Ω.

5. Circuit arrangement according to Claim 1, characterized in that the diode/capacitor filter network (24) consists of four subnetworks (A, B, B', C), the first subnetwork (A) consisting of a first filter capacitor (C₁) connected to the positive terminal of the rectifier (12), a first diode (D₁), connected in series with said first filter capacitor and connected to the negative terminal of the rectifier (12), and a series circuit connected between the first filter capacitor (C₁) and the first diode (D₁) and comprising a second diode (D₂) and a first charging impedance (Z₁), the second subnetwork (B) comprising a series circuit, which consists of a second filter capacitor (C₂) connected to the negative terminal of the rectifier (12), a third diode (D₃) connected to said second filter capacitor and a third filter capacitor (C₃) downstream of said third diode and connected to the positive terminal of the rectifier (12), and to which a further series circuit, consisting of a fourth diode (D₄) and second charging impedance (Z₂), is connected between the third filter capacitor (C₃) and the third diode (D₃), the third subnetwork (B') corresponding to the second subnetwork (B) and comprising a forth and fifth filter capacitor (C₄, C₅), a fifth and sixth diode (D₅, D₆) and a third charging impedance (Z₃), and the forth subnetwork (C) consisting of a series circuit comprising a sixth filter capacitor (C₆), connected to the negative terminal of the rectifier (12), and a seventh diode (D₇), connected to the positive terminal of the rectifier (12), and the first subnetwork (A) being connected to the second subnetwork (B) via the first charging impedance (Z₁) between the second filter capacitor (C₂) and the third diode (D₃), the second subnetwork (B) being connected to the third subnetwork (B') at a point present between the fourth filter capacitor (C₄) and the fifth diode (D₅) via the second charging impedance (Z₂) and the third subnetwork (B') being connected to the fourth subnetwork (C) at a node present between the sixth filter capacitor (C₆) and the seventh diode (D₇) via the third charging impedance (Z₃).

6. Circuit arrangement according to Claim 5, characterized in that the individual components satisfy the following equations:
C₁ = C₆
C₂ = C₅
C₃ = C₄
C₂ = 3 × C₁
C₃ = 1.5 × C₁
Z₁ = Z₂ = Z₃

7. Circuit arrangement according to Claim 6, characterized in that in the case of a 20 W/ 228V compact fluorescent lamp arrangement the individual components have the following values:
C₁ = 6.8 µF
C₂ = 15 µF
C₃ = 10 µF
Z₁ = Z₂ = Z₃ = 220 Ω

8. Circuit arrangement according to one of Claims 1 to 7, characterized in that the load or loads are low-pressure discharge lamps (18).

9. Circuit arrangement according to one of Claims 1 to 8, characterized in that the rectifier (12) is a bridge-connected rectifier, or a half-wave or full-wave rectifier, which can also be combined in multi-phase networks.

10. Circuit arrangement according to one of Claims 1 to 9, characterized in that the interference suppressor filter (10) is connected between the rectifier (12) and the diode/capacitor filter network (14; 24) and/or between the diode/capacitor filter network (14; 24) and the RF inverter (16) or on the AC side between the network and the rectifier (12).

## Revendications

1. Circuit pour le fonctionnement à haute fréquence d'un appareil utilisateur ou de plusieurs appareils utilisateurs (18) branchés en parallèle, comprenant
- un filtre antiparasites (10),
- un redresseur (12) relié au filtre antiparasites (10),
- un réseau de diodes et de condensateurs raccordé à ce redresseur et
- un inverseur HF (16) à la sortie duquel le ou les appareils utilisateurs (18) sont raccordés,
caractérisé par le fait que le réseau de diodes et de condensateurs est un filtre en échelles (14 ; 24) composé de diodes et de condensateurs et branché de telle sorte que ses condensateurs filtres (C₁ à C₄ ; C₁ à C₆) sont chargés et déchargés par l'intermédiaire d'un réseau de diodes et de résistances (D₁ à D₅, Z₁, Z₂ ; D₁ à D₇, Z₁ à Z₃), les condensateurs filtres étant branchés en série lors de la charge et de manière combinée parallèle-série lors de la décharge.

2. Circuit selon la revendication 1,
caractérisé par le fait que le filtre en échelles (14) composé de diodes et de condensateurs est constitué de trois réseaux partiels (A, B, C), le premier réseau partiel (A) étant constitué d'un premier condensateur filtre (C₁) relié au pôle positif du redresseur (12), d'une première diode (D₁) branchée en série avec le condensateur et reliée au pôle négatif du redresseur (12), et d'un circuit série raccordé entre le premier condensateur filtre (C₁) et la première diode (D₁) et composé d'une seconde diode (D₂) et d'une première impédance de charge (Z₁), le second réseau partiel (B) comprenant un circuit série composé d'un second condensateur filtre (C₂) raccordé au pôle négatif du redresseur (12), d'une troisième diode (D₃) raccordée à ce condensateur, et d'un troisième condensateur filtre (C₃) suivant la diode et relié au pôle positif du redresseur (12), un autre circuit série composé d'une quatrième diode (D₄) et d'une seconde impédance de charge (Z₂) étant raccordé au circuit série précédent entre le troisième condensateur filtre (C₃) et la troisième diode (D₃), le troisième réseau partiel (C) comprenant un circuit série composé d'un quatrième condensateur filtre (C₄) relié au pôle négatif du redresseur (12) et d'une cinquième diode (D₅) reliée au pôle positif du redresseur (12), et le premier réseau partiel (A) étant raccordé par l'intermédiaire de la première impédance de charge (Z₁), entre le second condensateur filtre (C₂) et la troisième diode (D₃), au second réseau partiel (B), le second réseau partiel (B) étant raccordé par l'intermédiaire de la seconde impédance de charge (Z₂), à un point de jonction entre le quatrième condensateur filtre (C₄) et la cinquième diode (D₅), au troisième réseau partiel (C).

3. Circuit selon la revendication 2,
caractérisé par le fait que les différents composants satisfont les égalités suivantes :
C₁ = C₄
C₂ = C₃
C₂ = 2 x C₁
Z₁ = Z₂

4. Circuit selon la revendication 3,
caractérisé par le fait que, pour un dispositif compact de tubes fluorescents 20 W/228 V, les composants ont les valeurs suivantes :
C₁ = 3,3 µF
C₂ = 6,8 µF
Z₁ = Z₂ = 220 Ω

5. Circuit selon la revendication 1,
caractérisé par le fait que le filtre en échelles (24) composé de diodes et de condensateurs est constitué de quatre réseaux partiels (A, B, B', C), le premier réseau partiel (A) étant constitué d'un premier condensateur filtre (C₁) relié au pôle positif du redresseur (12), d'une première diode (D₁) branchée en série avec le condensateur et reliée au pôle négatif du redresseur (12), et d'un circuit série raccordé entre le premier condensateur filtre (C₁) et la première diode (D₁) et composé d'une seconde diode (D₂) et d'une première impédance de charge (Z₁), le second réseau partiel (B) comprenant un circuit série composé d'un second condensateur filtre (C₂) raccordé au pôle négatif du redresseur (12), d'une troisième diode (D₃) raccordée à ce condensateur, et d'un troisième condensateur filtre (C₃) suivant cette diode et relié au pôle positif du redresseur (12), un autre circuit série composé d'une quatrième diode (D₄) et d'une seconde impédance de charge (Z₂) étant raccordé au circuit série précédent entre le troisième condensateur filtre (C₃) et la troisième diode (D₃), le troisième réseau partiel (B') correspondant au second réseau partiel (B) et comprenant un quatrième et un cinquième condensateurs filtres (C₄, C₅), une cinquième et une sixième diodes (D₅, D₆) ainsi qu'une troisième impédance de charge (Z₃), et le quatrième réseau partiel (C) étant constitué d'un circuit série comprenant un sixième condensateur filtre (C₆) relié au pôle négatif du redresseur (12) et une septième diode (D₇) reliée au pôle positif du redresseur (12), et le premier réseau partiel (A) étant raccordé par l'intermédiaire de la première impédance de charge (Z₁), entre le second condensateur filtre (C₂) et la troisième diode (D₃), au second réseau partiel (B), le second réseau partiel (B) étant raccordé par l'intermédiaire de la seconde impédance de charge (Z₂), à un point de jonction entre le quatrième condensateur filtre (C₄) et la cinquième diode (D₅), au troisième réseau partiel (B'), et le troisième réseau partiel (B') étant raccordé par l'intermédiaire de la troisième impédance de charge (Z₃), à un point de jonction entre le sixième condensateur filtre (C₆) et la septième diode (D₇), au quatrième réseau partiel (C).

6. Circuit selon la revendication 5,
caractérisé par le fait que les différents composants satisfont les égalités suivantes :
C₁ = C₆
C₂ = C₅
C₃ = C₄
C₂ = 3 x C₁
C₃ = 1,5 x C₁
Z₁ = Z₂ = Z₃

7. Circuit selon la revendication 6,
caractérisé par le fait que, pour un dispositif compact de tubes fluorescents 20 W/228 V, les différents composants ont les valeurs suivantes :
C₁ = 6,8 µF
C₂ = 15 µF
C₃ = 10 µF
Z₁ = Z₂ = Z₃ = 220 Ω

8. Circuit selon l'une des revendications 1 à 7,
caractérisé par le fait que le ou les consommateurs sont des lampes à décharge à basse pression (18).

9. Circuit selon l'une des revendications 1 à 8,
caractérisé par le fait que le redresseur (12) est un redresseur à pont, un redresseur demi-onde ou un redresseur pleine onde, qui peuvent aussi être combinés dans des réseaux polyphasés.

10. Circuit selon l'une des revendications 1 à 9,
caractérisé par le fait que le filtre antiparasites (10) est branché entre le redresseur (12) et les filtres en échelles (14 ; 24) composés de diodes et de condensateurs et/ou entre les filtres en échelles (14 ; 24) composés de diodes et de condensateurs et l'inverseur HF (16) ou bien, du côté du courant alternatif, entre le secteur et le redresseur (12).
